# EUROPÄISCHE PATENTSCHRIFT

(11) **EP 0 543 101 B1**
(45) Veröffentlichungstag und Bekanntmachung des Hinweises auf die Patenterteilung: **12.06.1996**
(21) Anmeldenummer: 92115399.5
(22) Anmeldetag: 09.09.1992
(51) Int. Cl.: F27D 3/02, F27B 9/22

(54) **Transporteinrichtung für Stoss- oder Durchlauföfen**
Transporting device for a pusher type or continuous oven
Dispositif de transport pour un four poussant ou continu

(30) Priorität: 21.11.1991 CH 3414/91
(43) Veröffentlichungstag der Anmeldung: 26.05.1993
(73) Patentinhaber: Gautschi Electro-Fours SA, CH-8274 Tägerwilen (CH)
(72) Erfinder: Pflanz, Rudolf, W-7700 Singen (DE); Engelberg, Franz, W-7750 Konstanz (DE)
(74) Vertreter: Hunziker, Jean

(56) Entgegenhaltungen:
- EP-A- 0 108 047
- CH-A- 666 117
- DE-A- 2 849 655
- FR-A- 1 261 890
- FR-A- 2 498 308
- US-A- 4 676 743

## Beschreibung

Die vorliegende Erfindung betrifft eine Transporteinrichtung für Stoss- oder Durchlauföfen nach dem Oberbegriff des Anspruchs 1.

Zur Wärmebehandlung von Barren, Blöcken und dgl. Glühgut aus Aluminium oder Aluminiumlegierungen dienen sogenannte Stoss- oder Durchlauföfen, durch die das Glühgut bewegt und dabei der Glühtemperatur von einigen hundert Grad ausgesetzt wird.

Für den Durchlauf durch den Ofen wird das Glühgut auf Gleitschuhe gestellt, die sich auf Schienen des Ofens verschieben lassen, wofür in der Regel eine hydraulische Stossvorrichtung eingesetzt wird, die eine Stosskraft von einigen Hundert Tonnen entwickeln kann.

Bei grossen Ofenlängen und den damit verbundenen, langen Verschiebungswegen der hochbelasteten Gleitschuhe auf den Schienen bestehen wesentliche Probleme bei der Aufrechterhaltung der Schmiermittelversorgung der Gleitelemente zwischen den Gleitschuhen und den Schienen und dem Verschleiss der Gleitelemente. Probleme ergeben sich auch daraus, dass die Schienen und Gleitschuhe den zur Wärmebehandlung umgewälzten Warmluftstrom von Teilen des zu erwärmenden Gutes abschirmen, sodass die im "Windschatten" von Schienen und Gleitschuhen befindlichen Bereiche des Glühguts langsamer erwärmt werden.

Bekannte Ausführungen versuchen dem zuerst genannten Problem dadurch beizukommen, dass als Schmiermitel z.B. ein Graphit-Oel-Gemisch oder ein trockenes, pulverförmiges Graphit-Schmiermittel verwendet wird, das beim Aufsetzen des Gleitschuhes bzw. aus einer Vorratskammer des Gleitschuhes auf die Schienen aufgebracht wird. Diese Massnahme ist jedoch im praktischen Betrieb umständlich und in der Regel nur zu Beginn der Verschiebung wirksam. Bereits nach wenigen Metern muss dann der Restweg im Trockenlauf zurückgelegt werden, mit grossem Kraftaufwand bei starkem Verschleiss der Gleitflächen.

Aus der FR-A-2 498 308 ist es bekannt, eine verbesserte Gleitfähigkeit mit Gleitelementen - als Gleitleiste oder Gleitplatten - aus Kolloidalgraphit zu erzielen, die auf der Unterseite des Gleitschuh-Steges oder auf der Schiene angebracht sind. Diese Gleitelemente sind jedoch bei hohen Belastungen nicht ausreichend widerstandsfähig. Insbesondere an Ecken und Kanten brechen Materialteile der Gleitelemente heraus, sodass die Gleitflächen durch Bruchstücke, rauhe Bruchkanten und Abrieb stark geschädigt werden und so ihre Funktion als "Gleitfläche" nicht mehr erfüllen. Hierbei erweisen sich auch Kanten als gefährdet, die senkrecht zur Bewegungsrichtung auf den Gleitflächen angeordnet sind. Es wurde auch versucht, durch zur Bewegungsrichtung schräge Nuten auf Rechteck-Gleitplatten den Abrieb und Bruchstücke von der Gleitfläche fernzuhalten. Diese Massnahme bringt jedoch kaum Erfolg, da die schrägen Nuten auf Rechteck-Gleitplatten zu sehr abbruchgefährdeten spitzen Winkeln unter 90° führen. Ausserdem können sich grössere Bruchstücke in den Nuten festklemmen und so zu weiteren Zerstörungen auf der Gleitfläche führen. Beschädigte oder gar zerstörte Gleitelemente bewirken aber einen grossen Verschiebungswiderstand und erfordern daher grosse Kräfte zur Verschiebung der Gleitschuhe mit dem Glühgut.

Erheblich geringere Kräfte zur Verschiebung der Gleitschuhe mit dem darauf abgestützten Glühgut sind bei der aus der CH-PS 666 117 bekannten Transporteinrichtung erforderlich, bei welcher sich der Gleitschuh über ein in Transportrichtung verlaufendes endloses Rollenband auf den Schienen abstützt. Diese Lösung ist aber konstruktiv sehr aufwendig und sowohl in der Herstellung als auch im Unterhalt teuer.

Aufgabe der vorliegenden Erfindung ist es, eine Transporteinrichtung nach dem Oberbegriff des Anspruchs 1 so auszugestalten, dass sie unter Vermeidung der Nachteile der bekannten Konstruktionen eine möglichst verschleissfreie- und ruckfreie Bewegung zwischen den Gleitschuhen und den Schienen ermöglicht, zugleich aber auch Paarungen von Gleitelementen auf Gleitschuhen und Schienen mit geringem Reibungskoeffizient zulässt.

Diese Aufgabe wird mit einer Transporteinrichtung mit den Merkmalen des Kennzeichens des Anspruchs 1 gelöst.

Durch die erfindungsmässe besondere Anordnung, Befestigung und Gestaltung der Gleitelemente und deren Gleitflächen wird die Gefahr eines Kanten-Abbruches und erhöhten Verschleisses dadurch gemindert, dass bei Gleitelementen mit einer rechteckförmigen Gleitfläche insbesondere im Bereich der Vorderkante und Hinterkante die Gleitfläche geneigt ist, sodass an dieser stark beanspruchten Stelle am Anfang und Ende jeder Gleitfläche jeweils eine nur schwach ausgeprägte Kante mit einem Kantenwinkel weit über 90^{o} bis gegen 170^{o} der starken Beanspruchung standhält und kaum durch Ausbrechen von Materialteilen gefährdet wird. Werden Gleitelemente mit Polygon-Flächen verwendet - also z.B. Gleitflächen als Sechseck, Achteck - so sind die Winkel zwischen den Seiten einer Polygon-Fläche von vornherein grösser als 90^{o}, sodass alle Kanten-Winkel derartiger Gleitelemente grösser als 90^{o} sind und somit eine entsprechende Stabilität aufweisen. Da bei solchen Polygon-Gleitflächen wesentliche Kanten schräg zur Bewegungsrichtung der Gleitschuhe angeordnet sind, wirken eventuelle Störungen - z.B. beim Ueberfahren von Schienen-Stössen - nicht gleichzeitig auf die gesamte Kante ein, sodass sogenannte Slip-Stick-Effekte weitgehend vermieden werden können. Das ist auch bei kreisförmig ausgebildeten Gleitelementen der Fall.

Die Gleitelemente mit Polygon- und Kreisflächen können auch in einer Wabenstruktur sowohl auf der Unterseite eines Gleitschuh-Steges als auch auf den Schienen angebracht sein. Bei einer Anordnung von Gleitelementen an den Gleitschuhen und auf den Schienen können verschiedene Gleitflächen-Strukturen und -Anordnungen an den Gleitschuhen und auf den Schienen vorgesehen sein. Werden an den Gleitschuhen und auf den Schienen gleiche Gleitflächen-Strukturen verwendet, ist auf den Schienen deren Grösse oder Anordnung vorteilhaft anders als an den Gleitschuhen. Dies vermeidet, dass durch deckungsgleiche Kanten der Gleitelemente von Gleitschuhen und Schienen bei der Bewegung der Gleitschuhe gleichzeitig Störungen und Bewegungshemmnisse ausgehen.

Für günstige Reibungskoeffiziente sorgt vorteilhaft eine geeignete Werkstoff-Paarung beider aufeinander gleitender Flächen, sowohl der Gleitfläche auf der Gleitschuh-Unterseite als auch der Schienen-Gleitfläche. Besondere Gleitelemente auf Schiene und Gleitschuh ermöglichen eine günstige Werkstoff-Paarung unabhängig vom Werkstoff der Gleitschuhe und Schienen, die z.B. meist aus hitzbeständigem Stahl ausgeführt werden. Einen geringen Reibungskoeffizient der aufeinander gleitenden Flächen ergibt z.B. eine Werkstoff-Paarung Keramik/Gusseisen.

Gleitelemente auf beiden Teilen - am Gleitschuh und auf den Schienen - lassen auch einen raschen Austausch durch Gleitverschleiss beschädigter Teile zu, ohne dass grössere Bauteile ausgewechselt oder ausgebessert werden müssen. Sind Schienen oder Gleitschuhe aus einem verschleissarmen Werkstoff, der mit den Gleitelementen als Gegengleitfläche einen geringen Reibungskoeffizieten ergibt, so können diese Gleitelemente auch wahlweise entweder nur an den Gleitschuhen oder auf den Schienen angebracht werden.

Werden Gleitelemente mit Kreisflächen verwendet, lassen sie sich an der Unterseite des Gleitschuh-Steges und/oder auf der Schiene in Oeffnungen von Halteplatten oder mit Bolzen drehbar um den Mittelpunkt der Kreis-Gleitfläche mit angemessenem Spiel befestigen. Hierdurch wird Verschleiss-Abrieb nicht immer an gleichen, bevorzugten Stellen unter Riefenbildung verursacht - wie dies bei festen, unbeweglichen Gleitelementen häufig der Fall ist - , sondern die Drehbarkeit eines solchen Kreisscheiben-Gleitelementes bewirkt einen gleichmässigeren Abrieb und damit eine Glättung der Gleitflächen. Drohende Anfressungen, die exzentrisch zur Bewewgungsrichtung auftreten, bewirken infolge der erhöhten Reibungskräfte bei der Bewegung ein Drehmoment, das ein drehbares Kreisscheiben-Gleitelement von der gefährdeten Stelle wegdrehen kann.

Eine gezielte, kontinuierliche Drehbewegung kann bei einem Kreisscheiben-Gleitelement dadurch eingeleitet werden, dass eine Längsrinne auf der Steg-Unterseite des Gleitschuhes und auf der Schiene den Gleitkontakt mit einer Hälfte des Gleitelementes nicht zulässt, sodass in dem belasteten Teil des Gleitelementes ein Drehmoment die Drehbewegung der Kreisscheibe einleiten kann. Vorteilhaft auf die Drehbewegung eines Kreisscheiben-Gleitelementes wirkt sich aus, wenn der Kreisscheiben-Umfang - wie ein Rad - an einer seitlichen Führungsleiste abrollen kann. Bei einer Anordnung der drehbaren Kreisscheiben-Gleitelemente auf der Schiene kann der abragende Gleitschuh-Schenkel als Führung dienen. Bei drehbaren Kreisscheiben-Gleitelementen am Gleitschuh wäre die Führungsleiste dann an der Schiene anzubringen.

Günstig auf eine gleichmässige Drehbewegung eines Kreisscheiben-Gleitelementes wirkt sich auch aus, wenn die Scheibenseite auf der Befestigungsfläche einen etwas geringeren Reibungskoeffizient aufweist als die Scheibenseite, auf der sich die Verschiebungsbewegung überlagert. Dies kann z.B. durch eine besondere Beschichtung einer Scheibenseite geschehen oder dadurch, dass ein Kreisscheiben-Gleitelement aus zwei Scheiben mit verschiedenem Reibungsverhalten zusammengesetzt wird.

Durch die Ueberlagerung einer gleichmässigen Drehbewegung der Kreisscheiben-Gleitelemente mit einer Verschiebungsbewegung - erfolgt nicht nur eine Glättung der Gleitflächen sondern im Mittel ergeben sich auch geringere Relativgeschwindigkeiten zwischen den Gleitflächen, sodass der Verschleiss der Gleitelemente geringer und die Lebensdauer somit grösser sein wird.

Die Kreisscheiben-Gleitelemente können auch in mehreren Reihen angeordnet werden, wobei sich platzsparende Ausführungen ergeben, wenn die Scheiben-Drehpunkte der Nachbarreihen jeweils um einen halben Drehpunktsabstand versetzt sind.

Beispielsweise Ausführungsformen des Erfindungsgegenstandes sind im Folgenden anhand der Zeichnungen näher erläutert. Es zeigt:
- Fig. 1: in schematischer Darstellung einen Stossofen mit einer erfindungsgemässen Transporteinrichtung und Zusatzluft-Kanälen im Querschnitt;
- Fig. 2: in perspektivischer Teilschnitt-Darstellung einen Gleitschuh und Schiene mit Gleitelementen;
- Fig. 3: in Draufsicht eine Schiene mit Gleitelementen in Rechteckform mit geneigten Gleitflächen an Vorder- und Hinterkante;
- Fig. 4: einen Schnitt nach der Linie IV-IV in Fig. 3;
- Fig. 5: eine Seitenansicht zu Fig. 3;
- Fig. 6: einen Schnitt nach der Linie VI-VI der Fig. 7 durch Gleitschuh-Warmluftkanäle und ein Rohr für Zusatzluft;
- Fig. 7: einen Schnitt nach der Linie VII-VII der Fig. 6;
- Fig. 8: eine Seitenansicht in Richtung des Pfeiles B in Fig. 7;
- Fig. 9: einen Stossofen im Querschnitt mit Düsenkasten und Warmluft-Durchströmung der Gleitschuhe;
- Fig. 10: einen Teilschnitt nach der Linie X-X der Fig. 9 durch Gleitschuh-Warmluftkanäle;
- Fig. 11: eine Draufsicht auf eine Schiene mit Gleitelementen aus Parallelogramm-Flächen mit abgeschnittenen "spitzen Ecken";
- Fig. 12: eine Draufsicht auf eine Schiene mit Gleitelementen aus Achteck-Flächen;
- Fig. 13: eine Draufsicht auf eine Schiene mit Gleitelementen aus Sechseck-Flächen in Wabenstruktur angeordnet;
- Fig. 14: eine Draufsicht auf Schienen mit Gleitelementen aus Kreisscheiben, drehbar fixiert mit einer Halteplatte;
- Fig. 15: einen Querschnitt nach der Linie XV-XV der Fig. 14;
- Fig. 16: eine Draufsicht auf eine Schiene mit Gleitelementen aus Kreisscheiben zusammengesetzt aus zwei Scheiben aus verschiedenem Material und drehbar fixiert mit Haltebolzen;
- Fig. 17: einen Querschnitt nach der Linie XVII-XVII der Fig. 16

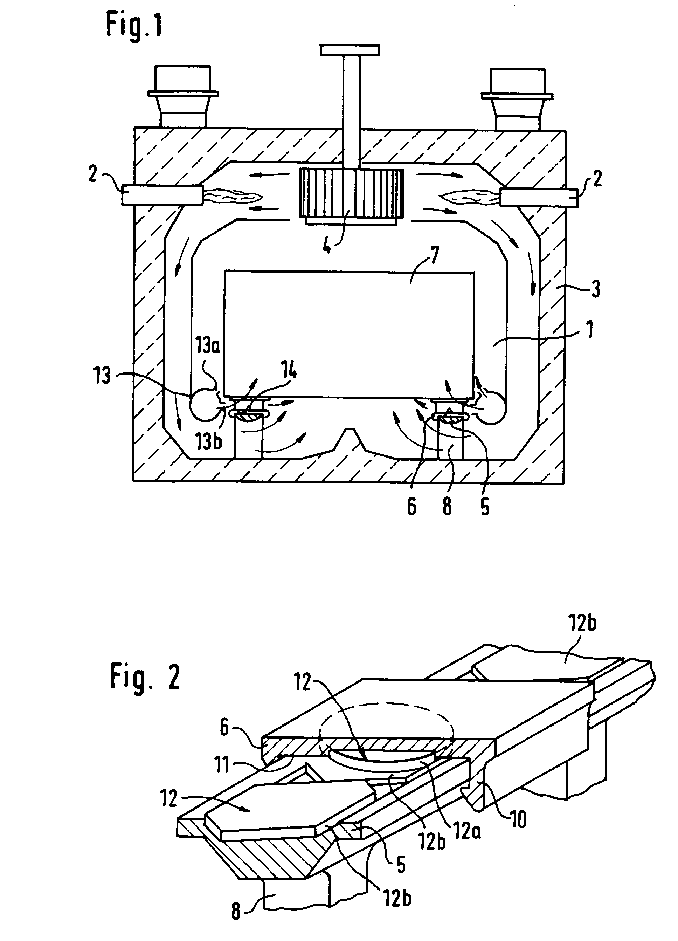

Der in Fig. 1 in einer stirnseitigen Schnittdarstellung veranschaulichte Stossofen lässt einen Glühraum 1 erkennen, in welchem Heissgase umlaufen, die von Brennern 2 im Ofenmantel 3 erhitzt und von einem Ventilator 4 umgewälzt werden.

In Bodennähe des Ofens befinden sich, abgestützt auf Sockeln 8, Schienen 5 einer Transporteinrichtung (vertikal zur Zeichnungsebene und über eine Länge von oft mehr als 20 Metern). Diese Transporteinrichtung umfasst einen, in der Regel jedoch mehrer Gleitschuhe 6, welche der Auflage von Glühgut 7, z.B. Barren oder Blöcke dienen, das durch den Ofen bewegt wird, wie das einleitend bereits ausführlich erläutert wurde.

Fig. 1 zeigt auch schematisch ein Rohr 13 mit Düsen 13a und 13b, aus denen Zusatzluft an die sonst im "Windschatten" von Schienen 5 und Gleitschuhen 6 liegenden Bereiche des Glühguts, hier eines Barrens, angeblasen wird. Hierbei werden aus den Düsen 13a die Stirnwände des Glühguts 7 direkt angeblasen und aus den Düsen 13b erfolgt die Anblasung durch Strömungskanäle 14 im Gleitschuh 6 auf die Seitenwände des Glühguts im Bereich der Gleitschuhe 6 und auf die Glühgut-Unterseite. Der Zusatzluftstrom wird von einem (nicht dargestellten) Zusatz-Ventilator in das Rohr 13 gefördert.

Fig. 2 lässt im einzelnen die an sich bekannte Ausführungsform von Gleitschuhen 6 erkennen mit im wesentlichen U-förmigem Querschnitt und den nach unten abragenden Schenkeln 10, die zur seitlichen Führung auf der Schiene 5 dienen.

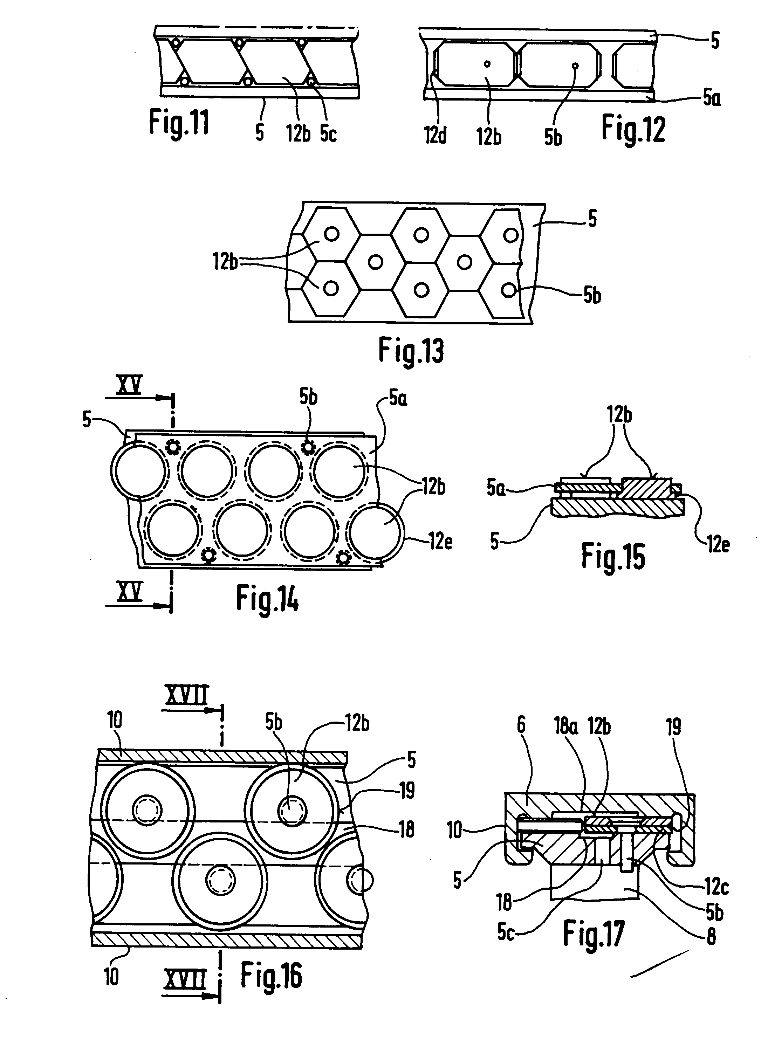

Zwischen dem Gleitschuh 6 und der Schiene 5 sind allgemein mit 12 bezeichnete Gleitelemente vorgesehen und zwar auf der inneren Stegseite 11 des Gleitschuhs 6 ein kreisscheibenförmiges Gleitelement 12a und auf der Schiene 5 in Schienenlängsrichtung hintereinander angeordnete plattenförmige Gleitelemente 12b. Bei den Ausführungsbeispielen der Fig. 2 und 11 weisen die auf der Schiene 5 angeordneten Gleitelemente 12b eine Gleitfläche in Form eines Parallelogramms auf, dessen "spitze Ecken" abgeschnitten sind. Im Bereich dieser abgeschnittenen "spitzen Ecken" wird Platz frei, wo sich Abrieb ansammelt und durch hierfür vorgesehene Durchlassöffnungen 5c in den Schienen 5 entweichen kann, wodurch eine Beschädigung der Gleitflächen durch Abrieb vermindert wird.

Aus der perspektivischen Darstellung in Fig. 2 ist ersichtlich, dass durch die unterschiedlichen Formen der Gleitelemente 12a und 12b die Kanten der Gleitelemente sich bei der Bewegung der Gleitschuhe ständig an anderen Stellen überschneiden. Hierdurch wird die Beanspruchung der Kanten und damit deren Verschleiss erheblich gemindert.

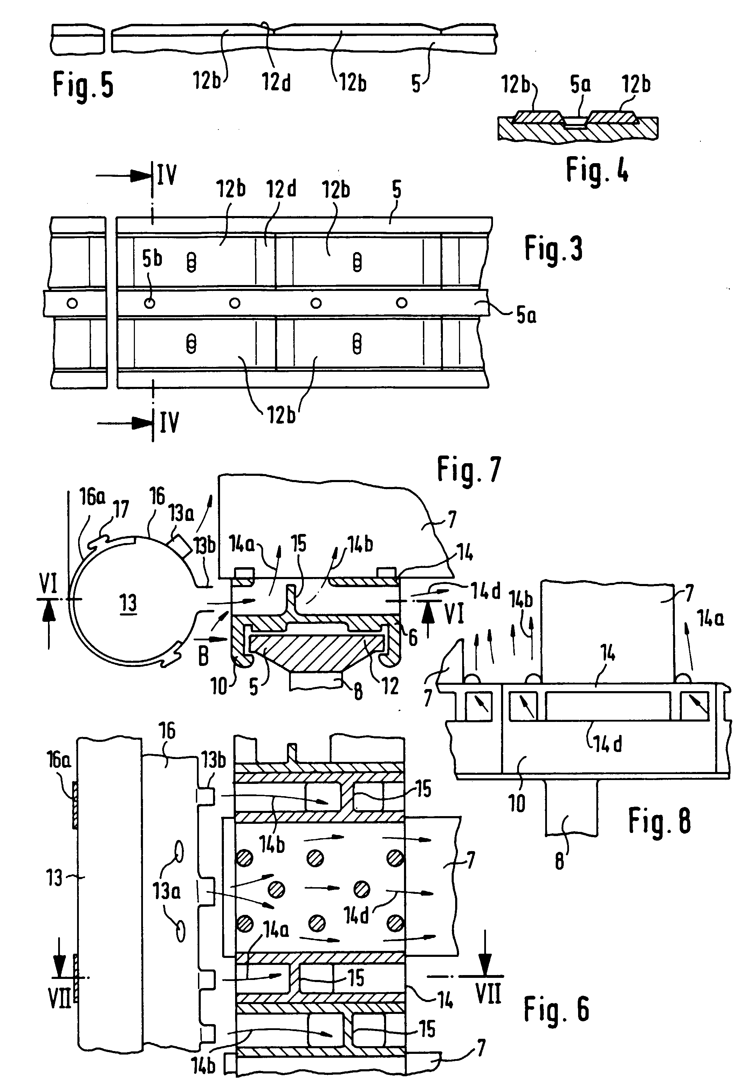

Auch bei Gleitelementen mit Rechteck-Gleitflächen lässt sich die Gefährdung der Gleitflächen-Kanten mindern, wenn der Winkel zwischen Gleitfläche und allen Seitenflächen deutlich grösser als 90° ausgeführt wird, wie dies für das Ausführungsbeispiel der Fig. 3, 4 und 5 zu sehen ist. Ausser den seitlichen Halteflächen der Gleitelemente 12b, die gemäss Fig. 4 so geschrägt sind, dass sie in einer "Schwalbenschwanz"-Nut der Schiene 5 mit einer Befestigungsleiste 5a (Fig. 5) befestigt werden können, haben auch die Gleitflächen der Gleitelemente 12b im Bereich der Vorder- und Hinterkanten 12d eine geringe Neigung. Hierdurch entsteht an der gleitenden Fläche eine stumpfe Kante mit einem Kantenwinkel in einer Grössenordnung von ca. 170°, sodass kaum eine Gefährdung dieser Kanten auftreten kann.

Grundsätzlich lassen sich diese hier beispielhaft auf der Schiene 5 angeordneten Gleitelemente 12b auch auf der Stegunterseite 11 der Schiene 5 statt der an dieser Stelle in Fig. 2 gezeigten Gleitelemente 12a in entsprechender Ausführung vorsehen. Gleiches gilt sinngemäss auch für die in Fig. 11 bis 17 dargestellten Ausführungsformen.

Fig. 12 zeigt auf der Schiene 5 befestigte Gleitelemente mit Rechteck-Flächen, deren Ecken abgeschnitten sind, sodass eine langgestreckte Achteck-Gleitfläche mit geneigten Flächen 12d an Vorder- und Hinterkante vorliegt. Die seitliche Befestigung erfolgt in einer Schrägnut der Schiene 5 und/oder wie hier mit einer Befestigungsleiste 5a. Die Halterung in Bewegungsrichtung übernehmen ausreichend unter die Gleitfläche abgesenkte Haltebolzen 5b. Unter Berücksichtigung der Wärmedehnung von Schiene 5 und Gleitelementen 12 muss zwischen den Gleitelementen entsprechender Zwischenraum und Ausdehnungsmöglichkeit eingeräumt sein, damit Wärmespannungen unterbleiben.

In Fig. 13 sind Gleitelemente 12b mit Sechseck-Gleitflächen in Wabenstruktur angeordnet und mit unter die Gleitfläche versenkten Bolzen 5b festgehalten. Auch bei dieser Anordnung ist an den Berührungskanten der Sechseck-Gleitelement-Scheiben ausreichend Spiel belassen, um grosse Anpresskräfte bei der Wärmedehnung zu vermeiden. Ein geringes Spiel zwischen Halte-bolzen 5b und Gleitelement 12 ermöglicht leichte Hin- und Herbewegungen um den Haltebolzen, sodass ein gewisser Glättungseffekt der Gleitflächen ermöglicht wird.

Die Ausführungen der Fig. 14 bis 16 zeigen Ausführungen der Gleitelemente 12b als Kreisscheiben. In Fig. 14 und 15 sind die Kreisscheiben-Gleitelemente 12b auf der Seite der Schiene 5 mit einem Wulst 12e versehen, sodass eine Halteplatte 5a mit Oeffnungen, in welche die oberen Teile der Gleitelemente 12b gerade mit Spiel passen, sie drehbar fixiert (vgl. auch Querschnitt XV-XV in Fig. 15). Bei Verwendung solcher um eine vertikale Achse drehbarer Kreisscheiben-Gleitelemente bewirken örtliche Unregelmässigkeiten mit grösseren Krafteinwirkungen auf die Gleitflächen ein Wegdrehen der Gleitelemente, wodurch die Gefahr einer Beschädigung gemildert wird. Die der Gleitbewegung überlagerte Drehbewegung bringt ausserdem eine gewisse Glättung der aufeinander gleitenden Flächen.

Die Kreisscheiben-Gleitelemente 12b in der Fig. 16 und 17 sind mit Bolzen 5b drehbar auf der Schiene 5 festgehalten. Um einen exzentrischen Kraftangriff der Reibkräfte auf die Scheibe zu erzielen, sind in der Schiene 5 und auf der inneren Stegseite der Gleitschuhe 6 Längsrinnen 18 und 18a vorgesehen, sodass nur auf ungefähr einer Hälfte der Kreisscheiben-Gleitelemente ein Reibschluss besteht. Am Umfang der Gleitelement-Radscheibe ist ein Abrollring 19 vorgesehen, der z.B. auf dem nach unten ragenden Gleitschuh-Schenkel abrollen kann, wobei der Drehpunkt der Gleitelement-Radscheibe so gewählt sein muss, dass der Abrollring 19 über die Schienen-Kante hinaussteht.

Günstig auf die Drehbewegung der Gleitelement-Radscheibe wirkt sich auch eine auf der Unterseite der Radscheibe befestigte zweite Scheibe 12c (vgl. Fig. 17) aus einem anderen Material oder eine besondere Beschichtung mit geringerem Reibungskoeffizient aus. Mit einer so während der Transport-Bewegung der Gleitschuhe überlagerten Drehbewegung der Gleitelemente erfolgt eine Glättung der Gleitflächen und ein Transport von Abrieb in die untere Längsrinne 18, wo Abrieb und Verunreinigungen durch Oeffnungen 5c nach unten fallen können. Die kontinuierliche Glättung der Gleitflächen hat bei der Transport-Bewegung eine geringere Reibung zur Folge und auch eine Minderung der Neigung zum Anfressen oder zu Slip-Stick-Effekten.

Eine Variante solcher Sandwich-Radscheiben ergibt sich dann, wenn die oberen, gleitenden Radscheiben 12 - meist aus gut gleitendem weniger bruchfestem Material ausgeführt - jeweils auf einer Scheibe 12c mit hoher Festigkeit befestigt werden, wobei eine (in Fig. 17 nicht gezeichnete) mit einer Nabe ausgeführte Scheibe 12c oder ein Distanzring zwischen Scheibe 12c und dem Sitz des Haltebolzens 5b auf der Schiene ein Drehen dieser Sachwich-Radscheiben-Ausführung mit einem geringen hemmenden Reibungsmoment ermöglicht.

Eine Ausführung mit den genannten Längsrinnen 18 und 18a, Abrollring 19 und Gleitelement-Doppelt-Radscheibe 12 und 12c ist grundsätzlich auch bei der in Fig. 14 und 15 dargestellten Variante möglich.

Zwischen zwei Radscheiben 12 und 12c dieser Ausführungsvariante lassen sich auch Kugeln oder radiale Zylinderrollen einlagern (nicht dargestellt). Die Kugeln bzw. Rollen können dabei in mehreren konzentrischen Kreisen angeordnet sein. Sie übertragen zwischen Gleitschuh-Unterseite und Schiene die Kräfte und rollen bei der Bewegung des Gleitschuhs 5 ähnlich wie die Kugeln eines Kugellagers ab. Mit der Kreisscheibe drehen sich die Kugeln bzw. Rollen in den Bereich der Längsrinnen 18 und 18a, wo sie beim Zurückdrehen in den Gleitbereich der Schienen keinen Kontakt mit Gleitschuh und Schiene haben.

Genauere Darstellungen der Strömungskanäle in den Gleitschuhen, durch die Zusatzluft an die von Schienen und Gleitschuhen abgeschirmten Bereiche der Barren geblasen werden kann, zeigen die Fig. 6 bis 10 mit den entsprechenden Schnittbildern.

So zeigt Fig. 7 einen Querschnitt durch die Schiene 5, den Gleitschuh 6 mit einem Strömungskanal 14, in dem eine Umlenkrippe 15 vorhanden ist, und das Rohr 13 für die Zusatzluft.

Aus dem Rohr 13 strömt durch die schräg nach oben gerichteten Düsen 13a Zusatzluft an die Stirnwand des Glühguts. durch die verschiedenen horizontalen Düsen 13b strömt Zusatzluft durch die beiden seitlich des Glühguts angeordneten Luftkanäle, wo die beidseitigen Zusatzluftströme 14a und 14b durch die versetzten Rippen 15 nach oben umgelenkt werden und unter Mitreissen von Umgebungsheissluft an den Seitenwänden des Glühguts 7 entlangströmen. Aus einer oder mehreren dazwischen angeordneten horizontalen Düsen 13b strömt ein Zusatzluftstrom 14d horizontal durch einen Strömungskanal direkt unter der dünnen, mit Bolzen abgestützten Barrenauflage durch, wie der Horizontalschnitt in Fig. 6 zeigt, und beaufschlagt so die Unterseite des Glühguts.

In Fig. 7 ist zu erkennen, dass das obere Viertel des dem Glühgut 7 zugewendeten Teiles des Rohres 13 geöffnet ist und abgedeckt wird mit ungefähr halbkreisförmigen Rohrteilen 16, an denen sich die Blasdüsen 13a und 13b befinden. Diese Blasdüsen-Rohrteile 16 halten Rohrschellen 16a fest mit Klemmvorrichtungen 17 nach entsprechender Einstellung der Blasstrahlen auf die Gleitschuh-Strömungskanäle 14 und die Stirnwand des Glühguts 7. Hierdurch ist es möglich - je nach Beschickung des Ofens - , die Blasdüsen 13a und 14b optimal einzustellen.

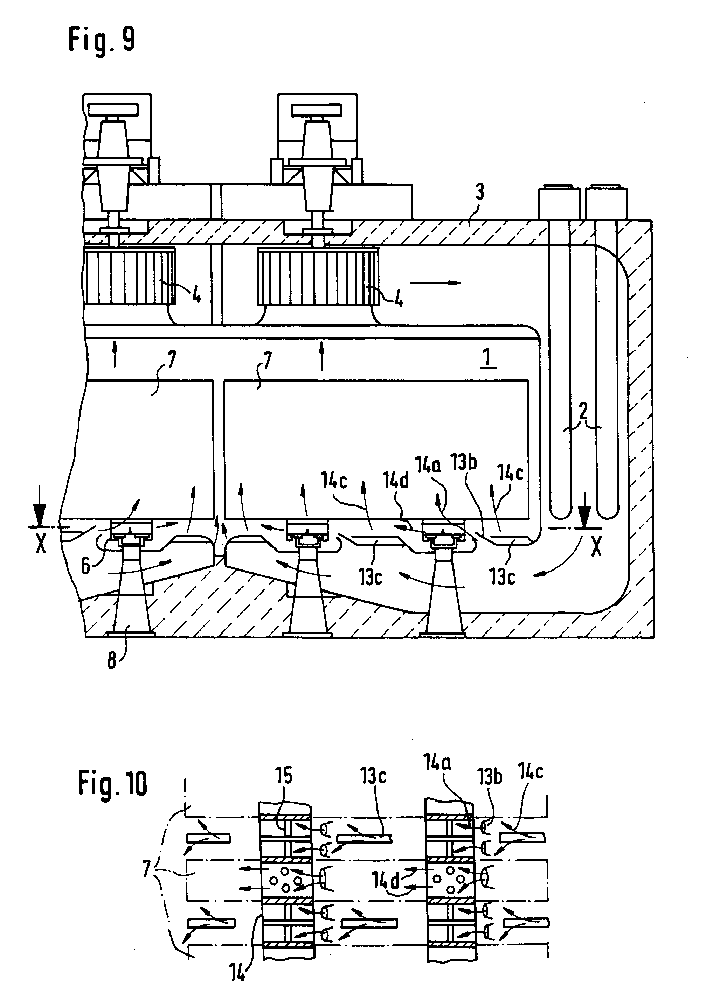

Gleitschuhe mit Strömungskanälen 14 können auch angewendet werden bei Ausführungsformen, welche die gesamte Heissluft-Anblasung des Glühguts 7 von unten aus Düsenkästen vorsieht, wie dies die Zeichnungen Fig. 9 und 10 darstellen. Zu den Schlitzdüsen 13c, welche Heissluft zwischen die Seitenwände des Glühguts blasen, sind Düsen 13b leicht schräg nach oben - in vorgenannter Weise in die Gleitschuh-Strömungskanäle 14 blasend - angeordnet.

## Patentansprüche

1. Transporteinrichtung für Stoss- oder Durchlauföfen, für den Gleittransport von auf mindestens einem Gleitschuh (6) abstellbarem Glühgut (7) durch den Ofen, wobei zur seitlich geführten Auflage des Gleitschuhs (6) auf Schienen (5) der Gleitschuh (6) einen angenähert U-förmigen Querschnitt mit nach unten abragenden Schenkeln (10) aufweist oder auf den Schienen Führungsleisten angeordnet sind, und wobei zur Verbesserung der Gleitfähigkeit zwischen dem Gleitschuh (6) und den Schienen (5) auf der inneren Stegseite des Gleitschuhs (6) und/oder auf den Schienen (5) Gleitelemente (12,12a,12b) angeordnet sind, dadurch gekennzeichnet, dass, in Schubrichtung des Glühguts (7) hintereinander angeordnet, mehrere Gleitelemente (12, 12a, 12b) vorhanden sind, deren Kanten an mindestens einem Teil der Ränder ihrer Gleitflächen gebrochen oder gerundet sind, oder in stumpfen Winkeln einander zugeordnet sind oder zumindest teilweise Kreisform haben.

2. Transporteinrichtung nach Anspruch 1, dadurch gekennzeichnet, dass die Gleitelemente (12b) als Platten oder Scheiben in einer oder mehreren Reihen in Schubrichtung hintereinander angeordnet sind.

3. Transporteinrichtung nach Anspruch 1 oder 2, dadurch gekennzeichnet, dass die Gleitelemente (12b) Rechteck- oder Parallelogramm-Platten mit abgeschnittenen spitzen Ecken sind.

4. Transporteinrichtung nach Anspruch 1 oder 2, dadurch gekennzeichnet, dass die Gleitelemente (12b) die Form gleichseitiger Vielecke oder von Kreisscheiben (12a) aufweisen.

5. Transporteinrichtung nach Anspruch 4, dadurch gekennzeichnet, dass die Gleitelemente (12b) in einer Wabenstruktur angeordnet sind.

6. Transporteinrichtung nach einem der Ansprüche 1 bis 5, dadurch gekennzeichnet, dass die Gleitelemente (12,12a,12b) aus einem Material bestehen, welches bei einer Ofenraum-Temperatur von ca. 600 bis 700° C einen annähernd gleichbleibenden günstigen Reibungskoeffizienten aufweist.

7. Transporteinrichtung nach einem der Ansprüche 1 bis 6, dadurch gekennzeichnet, dass die Gleitelemente (12,12a,12b) auf einer Seite aus Keramik und die Gleitflächen oder Gleitelemente der anderen Seite aus Gusseisen bestehen.

8. Transporteinrichtung nach einem der Ansprüche 1 bis 7, dadurch gekennzeichnet, dass die Gleitelemente (12,12a,12b) mit einem Bolzen (5b) jeweils im Zentrum einer Scheibe oder mit einer Halteplatte, durch deren Oeffnungen jeweils der obere Scheibenteil mit der Gleitfläche durchtritt, mit Spiel befestigt sind, sodass eine Scheibe um den Scheiben-Mittelpunkt eine Drehbewegung oder zumindest eine leichte Schwenkbewegung ausführen kann.

9. Transporteinrichtung nach Anspruch 8, dadurch gekennzeichnet, dass die Gleitelemente als Radscheiben ausgeführt sind, die etwa zur Hälfte berührungsfrei zwischen jeweils einer Längsrinne (18,18a) auf der Schiene (5) und der Unterseite des Gleitschuhs (6) verbleiben, sodass die resultierende Reibkraft jeweils exzentrisch an der Radscheibe angreift und so eine Drehbewegung ermöglicht.

10. Transporteinrichtung nach Anspruch 8 oder 9, dadurch gekennzeichnet, dass in Längsrichtung auf dem die Gegen-Gleitflächen der Radscheiben aufweisenden Teil, Mittel (10) angeordnet sind, an denen die Radscheiben abrollen können.

11. Transporteinrichtung nach einem der Ansprüche 8 bis 10, dadurch gekennzeichnet, dass die Radscheiben auf beiden Seiten verschieden beschichtet oder als Sandwich-Scheiben aus mindestens zwei Scheiben (12b, 12c) verschiedenen Materials zusammengesetzt sind, wobei die der Befestigungs-Seite zugewandte Radscheibe (12c) den geringeren Reibungskoeffizienten aufweist.

12. Transporteinrichtung nach Anspruch 11, dadurch gekennzeichnet, dass die oberen, gleitenden Radscheiben (12b) aus weniger bruchfestem gut gleitfähigem Material ausgeführt und auf einer Scheibe (12c) mit hoher Festigkeit befestigt sind, wobei eine mit einer Nabe ausgeführte Scheibe (12c) oder ein Distanzring zwischen Scheibe (12c) und dem Sitz des Haltebolzens (5b) ein Drehen dieser Scheiben mit einem geringen hemmenden Reibungsmoment ermöglicht.

13. Transporteinrichtung nach Anspruch 11, dadurch gekennzeichnet, dass zwischen einer Radscheibe (12b) und einer weiteren Scheibe (12c) Kugeln oder zylindrische Rollen radial gerichtet zur Scheibendrehachse in zu beiden Scheiben-Aussenseiten geöffneten Hohlräumen angeordnet auf einem oder mehreren zur Drehachse konzentrischen Kreisen befestigt sind, wobei die Kugel- bzw. Rollendurchmesser grösser als die Dicke der beiden zusammengehaltenen Radscheiben sind, sodass die Kugeln bzw. Rollen auf der Schiene (5) und der Gelitschuh-Unterseite abrollen können.

## Claims

1. Transporting device for pusher-type or continuous ovens, for the slidable conveyance through the oven of incandescent material (7) which can be deposited on at least one slide shoe (6), the slide shoe (6) having an approximately U-shaped cross-section with downwardly protruding portions (10) for the laterally guided support of the slide shoe (6) on rails (5), or guide bars being disposed on the rails, and slide elements (12, 12a, 12b) being disposed on the inner web-surface of the slide shoe (6) and/or on the rails (5) to improve the slidability between the slide shoe (6) and the rails (5), characterised in that a plurality of slide elements (12, 12a, 12b) are disposed behind one another when viewed with respect to the sliding direction of the incandescent material (7), the edges of said elements being chamfered or rounded on at least one portion of the rims of their slide faces, or they are associated with one another at obtuse angles or have, at least partially, a circular configuration.

2. Transporting device according to claim 1, characterised in that the slide elements (12b) are disposed behind one another, when viewed with respect to the sliding direction, as plates or discs in one or a plurality of rows.

3. Transporting device according to claim 1 or 2, characterised in that the slide elements (12b) are rectangular or parallelogram-shaped plates having clipped, pointed corners.

4. Transporting device according to claim 1 or 2, characterised in that the slide elements (12b) have the configuration of equilateral polygons or of circular discs (12a).

5. Transporting device according to claim 4, characterised in that the slide elements (12b) are disposed in a honeycomb structure.

6. Transporting device according to one of claims 1 to 5, characterised in that the slide elements (12, 12a, 12b) are formed from a material which has an approximately constant, advantageous coefficient of friction at an oven temperature of approx. 600 to 700° C.

7. Transporting device according to one of claims 1 to 6, characterised in that the slide elements (12, 12a, 12b) are formed from ceramics on one side, and the slide faces or slide elements of the other side are formed from cast iron.

8. Transporting device according to one of claims 1 to 7, characterised in that the slide elements (12, 12a, 12b) are each secured with some clearance by a pin (5b) in the centre of a disc or to a retaining plate, through the openings of which the upper disc portion with the slide face traverses, so that a disc can perform a rotary movement or at least a slight pivotal movement about the disc centre.

9. Transporting device according to claim 8, characterised in that the slide elements are configured as wheel discs, substantially half of which remain contact-free between a longitudinal groove (18, 18a) on the rail (5) and the underside of the slide shoe (6), so that the resulting frictional force engages eccentrically on the wheel disc and thus permits a rotary movement.

10. Transporting device according to claim 8 or 9, characterised in that, when viewed with respect to the longitudinal direction, means (10) are disposed on the portion provided with the counter-slide faces of the wheel discs, on which means (10) the wheel discs can travel.

11. Transporting device according to one of claims 8 to 10, characterised in that the wheel discs are coated differently on each side or are combined as sandwich discs formed from at least two discs (12b, 12c) of different materials, the wheel disc (12c) facing the securement side having the smaller coefficient of friction.

12. Transporting device according to claim 11, characterised in that the upper, sliding wheel discs (12b) are formed from a satisfactorily slidable material, which is less resistant to fracture, and are secured on a disc (12c) of high resistance, a disc (12c) which is provided with a hub or a spacer ring between disc (12c) and the seat of the retaining pin (5b) permitting a rotation of these discs with a minimal restraining friction torque.

13. Transporting device according to claim 11, characterised in that balls or cylindrical rollers are disposed between a wheel disc (12b) and another disc (12c) when orientated radially relative to the rotary axis of the discs in cavities which are open towards both outer surfaces of the discs, and they are secured on one or a plurality of circles which are concentric relative to the rotary axis, the diameters of the balls or rollers respectively being greater than the thickness of the two wheel discs which are held together, so that the balls or rollers respectively can travel on the rail (5) and the underside of the slide shoe.

## Revendications

1. Dispositif de transport pour fours poussants ou fours continus, pour le transport glissant de produits à recuire (7), à déposer sur au moins un patin (6), à travers le four, dans lequel, pour l'appui guidé latéralement du patin (6) sur des rails (5), le patin (6) présente une section transversale approximativement en U avec des branches (10) dépassant vers le bas, ou des baguettes de guidage sont placées sur les rails, et dans lequel, pour améliorer la capacité de glissement entre le patin (6) et les rails (5), sur le côté intérieur du dos du patin (6) et/ou sur les rails (5), sont placés des éléments de glissement (12, 12a, 12b), caractérisé en ce que sont prévus plusieurs éléments de glissement (12, 12a, 12b), disposés les uns derrière les autres dans le sens de poussée du produit à recuire (7), dont les arêtes sont brisées ou arrondies sur au moins une partie des bords de leurs surfaces de glissement, ou sont associées les unes aux autres en angles obtus, ou présentent au moins partiellement une forme circulaire.

2. Dispositif de transport selon la revendication 1, caractérisé en ce que les éléments de glissement (12b), en tant que plaques ou disques, sont disposés les uns derrière les autres dans le sens de poussée, en une ou plusieurs rangées.

3. Dispositif de transport selon la revendication 1 ou 2, caractérisé en ce que les éléments de glissement (12b) sont des plaques rectangulaires ou en parallélogrammes avec angles aigus coupés.

4. Dispositif de transport selon la revendication 1 ou 2, caractérisé en ce que les éléments de glissement (12b) ont la forme de polygones équilatéraux ou de disques circulaires (12a).

5. Dispositif de transport selon la revendication 4, caractérisé en ce que les éléments de glissement (12b) sont disposés en une construction à nids d'abeilles.

6. Dispositif de transport selon l'une des revendications 1 à 5, caractérisé en ce que les éléments de glissement (12, 12a, 12b) sont réalisés dans un matériau qui présente un coefficient de friction favorable, approximativement constant, à une température intérieure du four d'environ 600 à 700 °C.

7. Dispositif de transport selon l'une des revendications 1 à 6, caractérisé en ce que les éléments de glissement (12, 12a, 12b) sont en céramique sur un côté et les surfaces de glissement ou éléments de glissement de l'autre côté sont en fonte de fer.

8. Dispositif de transport selon l'une des revendications 1 à 7, caractérisé en ce que les éléments de glissement (12, 12a, 12b) sont fixés avec jeu avec un boulon (5b), toujours au centre d'un disque ou avec une plaque de maintien, à travers les ouvertures de laquelle passe la partie de disque supérieure avec la surface de glissement, de sorte qu'un disque peut exécuter un mouvement de rotation ou au moins un léger mouvement de pivotement autour du centre du disque.

9. Dispositif de transport selon la revendication 8, caractérisé en ce que les éléments de glissement sont réalisés en tant que disques de roue qui restent à peu près sur la moitié sans contact entre une gorge longitudinale (18, 18a) sur le rail (5) et la face inférieure du patin (6), de sorte que la force de friction résultante agit dans chaque cas de manière excentrée sur le disque de roue et permet ainsi un mouvement de rotation.

10. Dispositif de transport selon la revendication 8 ou 9, caractérisé en ce que dans la direction longitudinale, sur la partie présentant les contre-surfaces de glissement des disques de roue, sont prévus des moyens (10) sur lesquels les disques de roue peuvent rouler.

11. Dispositif de transport selon l'une des revendications 8 à 10, caractérisé en ce que les disques de roue portent un revêtement différent sur les deux côtés ou sont composés en tant que disques sandwich d'au moins deux disques (12b, 12c) de matériaux différents, le disque de roue (12c) tourné vers le côté de fixation présentant le plus petit coefficient de friction.

12. Dispositif de transport selon la revendication 11, caractérisé en ce que les disques de roue (12b) glissants, supérieurs, sont réalisés dans un matériau bien glissant, moins résistant à la rupture et sont fixés sur un disque (12c) de grande résistance, un disque (12c) réalisé avec un moyeu ou une bague d'écartement entre le disque (12c) et le siège du boulon de maintien (5c), permettant une rotation de ces disques avec un faible moment de friction de blocage.

13. Dispositif de transport selon la revendication 11, caractérisé en ce qu'entre un disque de roue (12b) et un autre disque (12c) sont placées des billes ou des rouleaux cylindriques, dirigés radialement vers l'axe de rotation du disque, dans deux cavités ouvertes vers les deux côtés extérieurs du disque, et sont fixés sur un ou plusieurs cercles concentriques à l'axe de rotation, les diamètres des billes ou des rouleaux étant supérieurs à l'épaisseur des deux disques de roue maintenus ensemble, de sorte que les billes ou les rouleaux peuvent rouler sur le rail (5) et la face inférieure du patin.
